(19) Europäisches Patentamt
European Patent Office
Office européen des brevets

(11) Veröffentlichungsnummer: **0 063 346**
**B1**

(12) # EUROPÄISCHE PATENTSCHRIFT

(45) Veröffentlichungstag der Patentschrift: **23.01.85**

(51) Int. Cl.⁴: **B 01 D 19/04, C 11 D 3/00**

(21) Anmeldenummer: **82103093.9**

(22) Anmeldetag: **10.04.82**

(54) **Pulverförmiger Entschäumer für wässrige Systeme, Verfahren zu seiner Herstellung und seine Verwendung.**

(30) Priorität: **18.04.81 DE 3115644**

(43) Veröffentlichungstag der Anmeldung: **27.10.82 Patentblatt 82/43**

(45) Bekanntmachung des Hinweises auf die Patenterteilung: **23.01.85 Patentblatt 85/4**

(84) Benannte Vertragsstaaten: **AT BE CH DE FR GB IT LI NL**

(56) Entgegenhaltungen:
**EP - A - 0 037 542**
**BE - A - 675 335**
**DE - A - 1 644 001**
**FR - A - 1 594 362**
**FR - A - 2 324 718**
**US - A - 3 344 075**
**US - A - 3 408 306**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Hempel, Hans-Ulrich, Dr., Wiesengrund 5, D-5063 Overath 5 (DE)**
Erfinder: **Schmadel, Edmund, Dr., Hüschelrath 9, D-5653 Leichlingen 1 (DE)**

**EP 0 063 346 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein pulverförmiger, silikonfreier Entschäumer für wäßrige Systeme, insbesondere für Wasch- und Reinigungsflotten sowie ein Verfahren zur Herstellung des neuen Entschäumers. Gegenstand der Erfindung ist ferner die Verwendung des Entschäumers als Schauminhibitor, insbesondere in Wasch- und Reinigungsmitteln.

Das Problem der Schaumregulierung in wäßrigen Systemen, die zu einer übermäßigen Schaumentwicklung beim Bewegen und/oder Erwärmen neigen, hat bereits zu zahlreichen Lösungsvorschlägen und dem Entstehen eines breiten Standes der Technik geführt. Insbesondere bei den heutigen Waschmaschinen, und hier vorwiegend bei Trommelwaschmaschinen, ist die Steuerung der Schaumentwicklung der Waschflotte über den gesamten Waschbereich unerläßlich, weil sowohl zu starkes Schäumen, aber auch das völlige Fehlen von Schaum für den Wascherfolg unerwünscht sind. Ein hervorragendes Entschäumungsmittel wurde in den Seifen auf Basis von im wesentlichen $C_{20}$- und $C_{22}$-Fettsäuren, wie sie aus Rapsölen und Fischtranen als natürlichen Quellen zur Verfügung stehen, gefunden. Aus den verschiedensten Gründen ist jedoch die zuverlässige Versorgung mit diesen Rohstoffen nicht gewährleistet. Auch ist die erforderliche relativ hohe Anwendungskonzentration, die in der Größenordnung von 2 bis 3,5 Gew.-%, bezogen auf das konfektionierte Waschmittel, liegt, als ein Nachteil dieses Entschäumers anzusehen.

Die Silikon-Entschäumungsmittel, die bekanntlich aus flüssigen Polysiloxanen mit Alkyl- oder Arylsubstituenten und feinteiliger kolloidaler Kieselsäure bestehen, bewirken die angestrebte Schaumregulierung bereits mit sehr geringen, wesentlich unter 1 Gew.-% des Waschmittels liegenden Einsatzmengen und sind in dieser Hinsicht den schaumdämpfenden Seifen überlegen. Allerdings haben die hohen Kosten der Silikonentschäumer und auch die Vielzahl der anwendungstechnischen Parameter, die bei der Schaumregulierung zu beachten sind, zu weiteren Anstrengungen auf diesem Gebiet geführt, mit dem Ziel, neue, auch silikonfreie Entschäumungsmittel zur Verfügung zu stellen. Es hat deshalb nicht an Versuche gefehlt, flüssige und feste Kohlenwasserstoffe oder Chlorkohlenwasserstoffe, wachsartige Fettsäureester, sowie langkettige, bis zu 50 C-Atome enthaltende Fettalkohole, Fettketone, aliphatische Disulfide bzw. Sulfoxide und dergleichen als schauminhibierende Wirkstoffe, zum Teil auch in Kombination mit hydrophobem, feinteiligem Siliciumdioxid, vorzuschlagen. Beispielsweise wurde in neuerer Zeit aus der europäischen Offenlegungsschrift 0 000 216 ein Waschmittel mit einem ternären Entschäumergemisch aus Paraffinöl, Paraffinwachs bzw. Esterwachs und einer hydrophobierten Kieselsäure bekannt. Dieses ternäre Gemisch kann nach den üblichen Methoden in das Waschmittel eingearbeitet sein; unter anderem kann dieses Entschäumergemisch auch als Agglomerat mit üblichen pulverförmigen Waschmittelbestandteilen vorliegen. Aus der europäischen Offenlegungsschrift 0 008 829 ist ebenfalls ein ternäres Entschäumergemisch, das aus einem hydrophilen nichtionischen Dispergator mit HLB-Werten von 14 bis 19, einer hydrophobierten Kieselsäure und einem Wachs besteht, bekannt. Dieses für den Einsatz in Waschmitteln bestimmte Entschäumergemisch wird als homogene Dispersion, die mit einem Granulat aus pulverförmigen Waschmittelbestandteilen vermischt ist, eingesetzt. Dazu kann das Entschäumergemisch aus der erwärmten flüssigen Form durch Abkühlen, beispielsweise Sprühkühlen, in eine feste feinteilige Form übergeführt und dann zugemischt werden. Als Alternative wird auch das Aufsprühen der warmen flüssigen Entschäumerdispersion auf kaltes Turmpulver bzw. auf kalte Granulate als Träger empfohlen.

In der älteren, nicht vorveröffentlichten europäischen Patentanmeldung 81 102 369.6 (EP-A-37 542) wird die Herstellung eines silikonfreien Entschäumers für wäßrige Systeme beschrieben. Bei dem Verfahren wird ein höhermolekularer, im wesentlichen 18 bis 30 Kohlenstoffatome enthaltender, kettenverzweigter primärer Alkohol mit einer hydrophobierten kolloidalen Kieselsäure im Verhältnis Alkohol : Kieselsäure wie 100 : 2 bis 100 : 20, vorzugsweise 100 : 3 bis 100 : 10 vermischt und unter Rühren auf Temperaturen zwischen 100 und 240°C für die Dauer von 1 bis 5 Stunden, vorzugsweise unter einer Inertgasatmosphäre, erhitzt. Beim anschließenden Abkühlen auf Raumtemperatur wird ein homogenes flüssiges Produkt erhalten. Der so hergestellte, praktisch silikonfreie Entschäumer eignet sich insbesondere für die Einarbeitung in Wasch- und Reinigungsmittel nach den üblichen Konfektionierungsmethoden. Als kettenverzweigte Alkohole kommen vorzugsweise Guerbet-Alkohole in Betracht. Die Wirksamkeit dieses Entschäumers ist mit derjenigen bekannter Silikonentschäumer vergleichbar.

Es wurde nun gefunden, daß sich die Wirksamkeit dieses Entschäumers noch steigern und seine Anwendbarkeit vergrößern läßt, wenn er zusätzlich einen Entschäumer-Hilfsstoff in homogener Verteilung enthält beziehungsweise wenn man ihn zusammen mit dem Entschäumer-Hilfsstoff in bestimmter Weise in ein schüttfähiges pulverförmiges Produkt überführt.

Gegenstand der Erfindung ist somit ein im wesentlichen silikonfreier pulverförmiger Entschäumer für wäßrige Systeme, enthaltend eine organische, silikonfreie Verbindung und feinteilige hydrophobierte Kieselsäure, ein Wachs und einen wasserlöslichen Träger, dadurch gekennzeichnet, daß er sich im wesentlichen zusammensetzt aus:

a) einem flüssigen, homogenen, durch 1—5stündiges Erhitzen auf 100° bis 240°C erhaltenen Gemisch eines 16—30 C-Atome aufweisenden, kettenverzweigten, primären Alkohols und einer

hydrophobierten, koloidalen Kieselsäure im Mischungsverhältnis Alkohol : Kieselsäure von 100 : 2 bis 100 : 20,

b) einem wasserunlöslichen Wachs mit einem Mengenverhältnis von (a) : (b) von 3 : 1 bis 1 : 3,

c) einem wasserlöslichen, pulverförmigen Träger,

wobei die Komponenten (a) und (b) auf dem Träger (c) in homogener Verteilung, vorliegen und wobei der pulverförmige Träger in Mengen, die ein schüttfähiges Pulverprodukt gewährleisten, vorhanden ist.

Vorzugsweise beträgt das Mischungsverhältnis von Alkohol : Kieselsäure im Bestandteil (a) 100 : 3 bis 100 : 10 und das Mischungsverhältnis der Komponenten (a) und (b) 1 : 1 bis 1 : 2.

Unter einem schüttfähigen pulverförmigen Produkt wird ein nichtklumpendes, rieselfähiges und daher leicht bewegliches Pulver verstanden, wobei die einzelnen Pulverteilchen von feinpulvrig bis grobkörnig reichen. Teilchengröße und Teilchenstruktur sind im wesentlichen abhängig von der ursprünglichen Feinheit des pulverförmigen Trägers sowie von der Art, in der die Einzelbestandteile zusammengebracht worden sind.

Als feinteilige hydrophobierte Kieselsäuren eignen sich alle hydrophobierten Kieselsäuren mit einer spezifischen Oberfläche von mindestens 50 $m^2/g$. Im allgemeinen liegen die Werte der spezifischen Oberfläche bei 100 bis 300 $m^2/g$. Bei diesen Kieselsäuren handelt es sich um mikrofeinteiliges Siliciumdioxid mit einer durchschnittlichen Primärteilchengröße von ca. 5 mμ bis ca. 50 mμ, bestimmt durch die Auswertung von elektronenoptischen Aufnahmen mit Teilchen der individuellen Größe im Bereich von im wesentlichen 3 mμ bis 150 mμ. Derartige feinteilige Kieselsäuren werden durch Flammenhydrolyse oder durch Fällung gewonnen. Die Hydrophobierung der Kieselsäuren wird üblicherweise durch Behandeln mit Alkylchlorsilanen, z. B. Dimethyldichlorsilan oder Trimethylchlorsilan oder cyclischen oder linearen Polydimethylsiloxanen vorgenommen. Die zur Hydrophobierung erforderlichen Mengen an Silanen bzw. Siloxanen liegen in der Größenordnung von 4 bis 6 Gew.-% bezogen auf die Kieselsäure; sie sind also äußerst gering. Bezogen auf den erfindungsgemäßen pulverförmigen Entschäumer handelt es sich um geringste Mengenanteile, die weit unter 1 Gewichtsprozent, meist sogar wesentlich unter 1 Gewichtspromill liegen, so daß es gerechtfertigt ist, den erfindungsgemäßen Entschäumer als im wesentlichen silikonfrei zu bezeichnen.

Die als Bestandteil der Komponente a) vorliegenden höhermolekularen kettenverzweigten primären $C_{16}-C_{30}$-Alkohole sind technisch leicht zugängliche Rohstoffe. Besonders geeignet sind die sogenannten Guerbetalkohole, d. h. einfach verzweigte Isoalkohole, die durch die Guerbetreaktion aus Fettalkoholen gewonnen werden. Diese Guerbetalkohole lassen sich durch die folgende allgemeine Formel wiedergeben:

$$R-CH_2-CH_2-\underset{}{\overset{\displaystyle R}{\overset{|}{C}}}H-CH_2-OH$$

in der die beiden Gruppen R gleich oder verschieden sein können und Alkylreste mit 4 bis 16 Kohlenstoffatomen bedeuten. Um eine gute Wirksamkeit aufzuweisen, sollen diese Guerbetalkohole im erfindungsgemäßen Mittel insgesamt 16 bis 30 Kohlenstoffatome aufweisen. Die zu verwendenden Guerbetalkohole, die einheitliche Verbindungen oder Gemische sein können, sind bei Raumtemperatur flüssig.

Außer den Guerbetalkoholen lassen sich auch andere kettenverzweigte primäre Alkohole, beispielsweise durch Oxosynthese zugängliche Produkte entsprechender Kettenlänge verwenden. Es hat sich allerdings gezeigt, daß hohe Entschäumerwirksamkeit und einfache und billige Rohstoffzugänglichkeit Kriterien sind, die sich gemeinsam und optimal bei den Guerbetalkoholen finden lassen.

Mit besonderem Vorteil werden zur Herstellung der als Ausgangsstoffe dienenden Guerbet-Alkohole die sogenannten Vorlauf-Fettalkohole verwendet, die bei der technischen Aufarbeitung der natürlichen Fette anfallen und für die direkte Weiterverarbeitung zu Tensiden in der Waschmittelindustrie ungeeignet sind. Es handelt sich dabei um die durch Hydrierung von Fettsäuren mit weniger als 12 Kohlenstoffatomen anfallenden Fettalkohole, wie z. B. die Verbindungen Hexanol, Octanol, Decanol. Die erfindungsgemäßen Entschäumer haben somit den Vorteil, daß sie aus besonders preiswerten Rohstoffen, die bei der Herstellung von Waschaktivsubstanzen zwangsläufig und ständig als unerwünschte Nebenprodukte anfallen, erhalten werden können. Zwar werden auch aus den Fettalkoholen mit 12 und mehr C-Atomen, die die wichtigen Rohstoffe zur Herstellung von Waschaktivsubstanzen darstellen, über die Guerbet-Reaktion und die erfindungsgemäße Weiterverarbeitung hochwirksame Schauminhibitoren erhalten, jedoch ist deren Wirksamkeit nicht größer als die aus den sogenannten Vorlauf-Fettalkoholen, so daß keine technische Notwendigkeit besteht, auf diese längerkettigen Fettalkohole als Rohstoffe zurückzugreifen. Bevorzugte Ausgangsstoffe der Guerbet-Alkohole sind somit die chemisch einheitlichen Verbindungen oder Gemische mit $C_6-C_{10}$ für R in der obigen Formel der Guerbet-Alkohole, mit Schwerpunkt der Häufigkeitsverteilung bei $C_8$, d. h. bei Decanol als Ausgangsrohstoff.

Geeignete wasserunlösliche Wachse sind eine Gruppe von Stoffen, die im Prinzip gleichen chemischen Aufbau aus langkettigen linearen Molekülteilen aufweisen, die jedoch im wesentlichen durch ihre physikalischen Eigenschaften gekennzeichnet sind. Es gilt hier die in »Ullmanns Enzyclopädie der technischen Chemie«, 1967, Band 18, Seite 264, angegebene Definition, wonach »Wachs« eine technologische Sammelbezeichnung für eine Reihe natürlicher oder künstlich gewonnener Stoffe ist, die in der Regel bei 20° C knetbar, fest oder brüchig-hart, grob- bis feinkristallin, durchscheinend bis opak, jedoch nicht glasartig sind, die über 40° C ohne Zersetzung und ohne Fadenziehen schmelzen, eine stark temperaturabhängige Konsistenz und Löslichkeit aufweisen und die unter leichtem Druck polierbar sind. Demnach fallen darunter natürliche rezente Wachse von Pflanzen oder Tieren, natürliche fossile Wachse, die aus fossilen Materialien, wie Braunkohle, Torf und insbesondere Erdöl isoliert werden können sowie synthetische Wachse, herstellbar beispielsweise nach dem Fischer-Tropsch-Verfahren oder durch Polymerisation von Ethylen bzw. thermischen Abbau von hochmolekularem Polyethylen. Von der chemischen Struktur her handelt es sich bei den Wachsen um langkettige Kohlenwasserstoffe, d. h. lineare Kohlenwasserstoffe, Iso- oder Ringparaffine mit Seitenketten, jedoch ohne sonstige funktionelle Gruppen, oder um Ester-, Säure- oder Alkoholwachse. Weil die Wachse im allgemeinen komplexe Stoffgemische sind, die keinen scharfen Schmelzpunkt haben, wird zu ihrer Charakterisierung statt dessen häufig der Erstarrungspunkt (E.P.) gemessen; man versteht darunter den Temperaturbereich, in dem das Wachs durch langsames Abkühlen aus dem flüssigen in den festen Zustand übergeht. Ein wichtiges Kriterium für die erfindungsgemäße Verwendbarkeit von Wachsen ist deren Eigenschaft, einen Erstarrungspunkt im Bereich von 40 bis 120° C, insbesondere aber von 60 bis 95° C zu besitzen. Dieses Erstarrungspunkt-Kriterium verbunden mit der leichten technischen Zugänglichkeit lassen insbesondere die natürlichen und synthetischen Paraffinwachse und ihre Gemische als besonders geeignet erscheinen.

Als pulverförmige wasserlösliche Trägerstoffe, auf denen das Alkohol/Kieselsäuregemisch und das Wachs in homogener Verteilung vorliegen, eignen sich prinzipiell solche wasserlöslichen Salze, die mit den zu entschäumenden wäßrigen Systemen verträglich sind, d. h. Verbindungen, die den bestimmungsgemäßen Ablauf in diesen Systemen nicht behindern bzw. die als Bestandteile dieser wäßrigen Systeme ohnehin in Frage kommen. Demnach handelt es sich hier insbesondere um die Alkalisalze der Phosphate, namentlich der polymeren Phosphate, der Borate, der Carbonate, der Silikate, der Sulfate und deren Mischungen, wobei diese Salze als Ausgangsstoffe hydratisiert oder calciniert sein können. Ein wegen seiner guten Trägereigenschaften besonders bevorzugter Trägerstoff ist das Natriumtriphosphat, vorzugsweise in seiner calcinierten, d. h. wasserfreien bzw. nur geringfügig hydratisierten Form. Wegen der insgesamt niedrigen Anwendungskonzentration des erfindungsgemäßen Entschäumers kann auch Triphosphat als Träger für solche wäßrigen Systeme noch verwendet werden, in denen im übrigen auf Phosphatarmut Wert gelegt wird. Ein gut geeigneter phosphatfreier Träger ist das Natriumsulfat, calciniert oder hydratisiert; pulverförmige Alkalisilikate, insbesondere durch Walzentrocknung oder Sprühtrocknung hergestellte hydratisierte Natriumsilikate sind ebenfalls als Träger geeignet. Ebenso eignen sich Gemische der genannten Salze, etwa als sprühgetrocknete Pulver, z. B. enthaltend Natriumtriphosphat, Natriumsilikat und Natriumsulfat.

Die erfindungsgemäßen pulverförmigen Entschäumer eignen sich in hervorragender Weise als Schauminhibitoren für wäßrige Systeme in Anwendungsgebieten, wie z. B. der Papierindustrie, Erdölgewinnung, Zuckerraffination, Textilindustrie, Abwasserbehandlung, ebenfalls für Schneidölemulsionen, Destillations- und Flotationsverfahren sowie insbesondere für bewegte und erhitzte Wasch- und Reinigungsflotten. Die erfindungsgemäßen Entschäumer sind alkalistabil und werden auch durch wäßrige Alkali- und Tensidlösungen nicht inaktiviert. Sie eignen sich daher in idealer Weise für die Einarbeitung in pulverförmige aber auch flüssige Wasch- und Reinigungsmittel nach den üblichen Methoden. Eine besonders bevorzugte Variante ist die Einarbeitung des pulverförmigen Entschäumers in pulverförmige Wasch- und Reinigungsmittel durch Vermischen mit einem pulverförmigen, beispielsweise durch Sprühtrocknung hergestellten Vorgemisch. Auch die direkte Einarbeitung in den durch Sprühtrocknung weiterzuverarbeitenden Waschmittelansatz ist prinzipiell möglich, wenn es auch dann meistens zu einem partiellen Wirkungsverlust kommt, so daß höhere Einsatzmengen erforderlich sind.

Der erfindungsgemäße pulverförmige Entschäumer enthält im allgemeinen 2 bis 20, vorzugsweise 4 bis 15 Gew.-% der oben definierten Komponente (a) und 2 bis 20, vorzugsweise 4 bis 15 Gew.-% der oben definierten Komponente (b). Beide Wirkstoffkomponenten sollen in homogener Verteilung auf dem in Anteilen von 60 bis 96 Gew.-% vorhandenen pulverförmigen Träger gemäß Komponente (c) vorliegen. Das Kriterium der Homogenität ist für die gute Wirksamkeit des Entschäumers von besonderer Bedeutung. Homogenität liegt dann vor, wenn durch geeignete Herstellungsbedingungen dafür gesorgt wird, daß im Endprodukt der verzweigte Alkohol und das Wachs gleichmäßig verteilt vorliegen, so daß bei der Analyse einer Probe des Endprodukts aliquote Mengen des Wachses und des verzweigten Alkohols gefunden werden. Bei der Analyse wird eine Probe in Wasser gelöst, die Lösung mit n-Hexan extrahiert und nach Entfernen des Hexans die Gesamtmenge und die Hydroxylzahl des Rückstandes bestimmt.

Die erforderliche Homogenität kann durch Einhaltung bestimmter Mischbedingungen erzielt werden. Die Erfindung betrifft deshalb auch ein Verfahren zur Herstellung des oben definierten pulverförmigen Entschäumers. Dieses Verfahren ist dadurch gekennzeichnet, daß man

a) einen 16—30 C-Atome aufweisenden, kettenverzweigten primären Alkohol mit einer hydrophobierten, kolloidalen Kieselsäure im Mischungsverhältnis, Alkohol : Kieselsäure von 100 : 2 bis 100 : 20 homogenisiert und unter fortwährendem Vermischen während 1 bis 5 Stunden auf Temperaturen von 100 bis 240° C erhitzt,
b) ein wasserunlösliches Wachs bei einer Temperatur, die oberhalb seines Erstarrungspunktes liegt, mit der Komponente (a) im Verhältnis 3 : 1 bis 1 : 3 und
c) einen wasserlöslichen, pulverförmigen Träger, der in einer Menge vorliegt, die ein schüttfähiges Pulverprodukt gewährleistet, miteinander vermischt, so daß die Komponente (a) und (b) auf dem Träger (c) in homogener Verteilung vorliegen.

Das Homogenisieren erfolgt in geeigneten Mischvorrichtungen, beispielsweise in einem Kneter. Im Anspruch an die Homogenisierung wird das Gemisch, gegebenenfalls unter weiterem Vermischen, auf Raumtemperatur abgekühlt und in ein schüttfähiges Pulverprodukt überführt; beispielsweise indem man es durch mechanische Bearbeitung zerkleinert beziehungsweise durch ein Sieb preßt.

Nach einer bevorzugten Ausführungsform des Verfahrens wird zunächst das Trägermaterial erwärmt, und zwar auf eine Temperatur, die über der Erstarrungspunkts-Temperatur des zu verwendenden Wachses liegt; dann wird das vorbereitete flüssige Alkohol/Kieselsäure-Gemisch der Komponente (a) hinzugegeben und beide Komponenten werden solange vermischt bis eine homogene Masse vorliegt. Je nach der Größe des Einsatzes und der Mischvorrichtung werden dafür Zeiten von ca. 10 bis 30 Minuten benötigt. Danach wird das erwärmte flüssige Wachs Komponente (b) hinzugegeben, und es wird erneut bis zur Homogenität vermischt. Das Verfahrensprodukt wird unter anschließendem weiteren Vermischen und Abkühlenlassen auf Raumtemperatur als feste Masse, die als schüttfähiges Pulver anfällt, erhalten.

Nach einer anderen, ebenfalls bevorzugten Verfahrensvariante wird zunächst die flüssige Alkohol/Kieselsäure-Komponente (a) mit dem verflüssigten Wachs (b) vermischt, wobei man ebenfalls Temperaturen, die über dem Erstarrungspunkt des Wachses liegen, anwendet. Die resultierende flüssige Mischung wird dann mit dem ebenfalls erwärmten Träger wiederum bis zur Homogenität vermischt, wobei im allgemeinen so vorgegangen wird, daß man das flüssige Gemisch aus den Komponenten (a) und (b) zu dem vorgewärmten festen Träger (c) hinzugibt. Durch Abkühlen unter ständigem Mischen wird wiederum dieses Herstellungsverfahren beendet.

Wie bereits ausgeführt, sind die erfindungsgemäßen pulverförmigen Entschäumer besonders gut für die Einarbeitung in Wasch- und Reinigungsmittel geeignet.

Ein weiterer Gegenstand der Erfindung ist daher die Verwendung der Verfahrensprodukte als Schauminhibitoren in Wasch- und Reinigungsmitteln. Von besonderem Interesse ist die Verwendung in solchen Wasch- und Reinigungsmitteln, die in geschlossenen Waschmaschinen und Geschirreinigungsmaschinen mit starker mechanischer Bearbeitung des Reinigungsgutes eingesetzt werden. Wie bereits ausgeführt genügen Zusätze des erfindungsgemäßen pulverförmigen Entschäumers in geringen Mengen in den Wasch- und Reinigungsmitteln, um die Schaumentwicklung zu steuern. Bei Mengenanteilen von 0,01—1 Gew.-%, und insbesondere von 0,05—0,2 Gew.-% des schauminhibierenden Wirkstoffs der oben definierten Alkohol/Kieselsäure-Komponente (a) und bei Mengenanteilen der oben definierten Wachs-Komponente (b) in der gleichen Größenordnung, bezogen auf das Wasch- und Reinigungsmittel, liegen die Mengenanteile des pulverförmigen Entschäumers in den Wasch- und Reinigungsmitteln im Bereich von 0,15—15 Gew.-%, vorzugsweise von 0,8—4 Gew.-%. Die erfindungsgemäßen Produkte sind somit bezüglich ihrer Anwendungskonzentration der schauminhibierenden Wirkstoffe vergleichbar mit den wirksamsten Silikonpräparaten des Handels. Wasch- und Reinigungsmittel, die den erfindungsgemäßen Schauminhibitor enthalten, können übliche anionische, nichtionische, zwitterionische und ggf. auch kationsiche Tenside mit an sich starker Schaumentwicklung enthalten, außerdem wasserlösliche und wasserunlösliche Gerüstsubstanzen, Alkalien, Bleichmittel sowie sonstige, das Wasch- und Reinigungsergebnis verbessernde bzw. die Anwendungseigenschaften des Reinigungsgutes verbessernde Zusätze.

## Beispiele

Die folgenden Beispiele sollen die Erfindung näher erläutern; es wird zunächst die Herstellung der Alkohol/Kieselsäure-Komponente (vgl. EP-A-37 542) beschrieben:

### Beispiel 1

Die Mengen von 100 g technischen 2-Octyldodecanol ($R = C_8H_{17}$ in der oben angegebenen allgemeinen Formel, Brechungsindex bei 20° C: 1,454—1,456), im Handel z. B. unter der Bezeichnung Eutanol G erhältlich, und 3,5 g einer mit Dimethyldichlorsilan hydrophobierten pyrogenen

Kieselsäure mit einer BET-Oberfläche von 120 $m^2/g$ und einem mittleren Primärteilchendurchmesser von 16 mμ (Aerosil R 972 der Firma Degussa) wurden mit einem Pendraulik-Rührer (Firma Pendraulik, Bad Münder, Bundesrepublik Deutschland), der mit einer Zahnscheibe von 40 mm Durchmesser versehen war, bei 900 bis 1000 U/min homogenisiert. Danach wurde der Ansatz zur Stabilisierung unter Rühren in einer Stickstoffatmosphäre 5 Stunden auf 240° C erhitzt. Das erhaltene Produkt war flüssig und hatte eine Viskosität von 126 mPa · s bei 20° C.

## Beispiele 2 und 3

Beispiel 2 wurde nach der Vorschrift von Beispiel 1 hergestellt, jedoch wurde nur auf 100° C erhitzt; bei Beispiel 3 wurde ebenfalls nach der Vorschrift von Beispiel 1 verfahren, es wurde jedoch nach dem Homogenisieren auf 150° C erhitzt.

Viskosität der so erhaltenen Produkte bei 20° C:

Beispiel 2: 153 mPa · s;
Beispiel 3: 138 mPa · s.

## Beispiel 4

Der Ansatz entsprach dem des Beispiels 1. Das Gemisch wurde homogenisiert und anschließend 5 Stunden unter Rühren bei ca. 400 U/min mit einem üblichen Teflonblattrührer in einer Stickstoffatmosphäre auf 200° C erhitzt. Das erhaltene Produkt hatte eine Viskosität (20° C) von 130 mPa · s.

## Beispiele 5 und 6

Es wurde nach der Vorschrift des Beispiels 1 verfahren; jedoch wurden anstelle von 3,5 g, 5,0 g und 8,0 g der in Beispiel 1 beschriebenen Kieselsäure hergestellt. Die Viskosität bei 20° C der resultierenden Gemische lag bei 155 mPa · s für das Produkt von Beispiel 5 und bei 579 mPa · s für das Produkt von Beispiel 6.

## Beispiele 7 und 8

Je 100 g 2-Octyldodecanol wurden mit einer mit Organochlorsilanen hydrophobierten Fällungskieselsäure (BET-Oberfläche 110 $m^2/g$, mittlerer Primärteilchendurchmesser 28 mμ, Handelsprodukt Sipernat D 17 der Firma Degussa) versetzt und wie in Beispiel 1 behandelt. Es wurden 3,5 g Fällungskieselsäure (Beispiel 7) bzw. 8,0 g der Fällungskieselsäure (Beispiel 8) eingesetzt.

Viskosität (20° C) der resultierenden Gemische:

Beispiel 7: 71 mPa · s;
Beispiel 8: 93 mPa · s.

## Beispiel 9

Aus einem technischen Fettalkoholschnitt im Bereich $C_{10}/C_{16}$ wurde ein Gemisch verschiedener Guerbet-Alkohole nach dem in der DE-OS 2 634 676 beschriebenen Verfahren hergestellt. Dieser Guerbet-Alkohol hatte die folgende Zusammensetzung:

| | |
|---|---|
| $C_{22}H_{45}OH$: | 3 Gew.-%; |
| $C_{24}H_{49}OH$: | 44,7 Gew.-% |
| $C_{26}H_{53}OH$: | 25,3 Gew.-%; |
| $C_{28}H_{57}OH$: | 13,1 Gew.-%; |
| $C_{30}H_{61}OH$: | 2,4 Gew.-%. |

100 g dieser Mischung wurden mit 3,5 g der in Beispiel 1 angegebenen Kieselsäure versetzt und wie in Beispiel 1 beschrieben behandelt. Das resultierende Produkt hatte eine Viskosität von 160 mPa · s bei 20° C.

Beispiel 10

In einem Technikums-Ansatz wurden in einem 10 l fassenden Rührgefäß 6000 g Eutanol G vorgelegt; im Verlauf von 2 Minuten wurden 210 g Aerosil R 972 hinzugegeben. Während der Zugabe wurde mit einem Pendraulik-Rührer, der mit einer Zahnscheibe von 60 mm Durchmesser versehen war, bei 3700 U/min intensiv gerührt. Nach der Zugabe der Aerosils wurde noch 2 Minuten lang bei der gleichen Umdrehungszahl nachgerührt. Danach wurde der Ansatz in einen 10-l-Kolben umgefüllt und unter Rühren mit einem Blattrührer (400 U/min) in einer Stickstoffatmosphäre 5 Stunden lang auf 240° C erhitzt. Das resultierende flüssige Produkt hatte eine Viskosität (Brookfield, 20° C) von 152 mPa · s.

Beispiel 11

In diesem Technikums-Ansatz wurde ein 30-l-Rührgefäß benutzt und darin die Menge von 12 kg Eutanol G vorgelegt. Innerhalb von 5 Minuten wurde unter Rühren (Rührwerk der Firma Ekato KG, Schopfheim, Bundesrepublik Deutschland; Zahnscheibe von 180 mm Durchmesser, Drehzahl 1000 U/min) mit 1,08 kg Aerosil R 972 versetzt. Nach beendeter Zugabe wurde noch 5 Minuten lang bei 1000 U/min gerührt; anschließend wurde die Drehzahl für weitere 5 Minuten auf 1500 U/min gesteigert. Danach wurde die so homogenisierte Mischung in zwei Dreihalskolben mit je 10 l Fassungsvermögen umgefüllt und es wurde 5 Stunden lang unter Rühren (Blattrührer, 400 U/min) in einer Stickstoffatmosphäre auf 240° C erhitzt. Das resultierende flüssige Gemisch hatte eine Viskosität (Brookfield, 20° C) von 500 mPa · s.

Es folgen nun die Beispiele, die die Herstellung des erfindungsgemäßen pulverförmigen Entschäumers beschreiben:

Beispiele 12, 13 und 14

In einem Laborkneter mit heizbarem Arbeitsbehälter und einem Fassungsvermögen von 0,75 l (Firma Janke & Kunkel, Staufen/Breisgau, Bundesrepublik Deutschland) wurden unterschiedliche Mengen von Natriumtriphosphat (Thermphos L, Handelsprodukt der Firma Hoechst AG) vorgelegt und auf 90° C erhitzt. Dann wurden unterschiedliche, weiter unten angegebene Mengen des Alkohol/Kieselsäuregemisches gemäß Beispiel 10 unter Mischen hinzugegeben. Es wurde 15 Minuten bei 90° C gemischt. Danach wurden die unterschiedlichen, ebenfalls unten angegebenen Mengen eines durch Erhitzen auf 90° C verflüssigten Paraffins mit dem Erstarrungspunkt 68/72° C (Handelsprodukt der Firma Merck) hinzugegeben. Danach wurde noch weitere 15 Minuten lang bei 90° C gemischt. Anschließend wurde unter weiterem Mischen in ca. 20 Minuten auf Raumtemperatur abgekühlt.

Die folgende Tabelle gibt das Gewichtsverhältnis der eingesetzten Mischungskomponenten wieder:

| Beispiel | Natriumtriphosphat (Gew.-Teile) | Alkohol/Kieselsäure-Komponente von Beispiel 10 (Gew.-Teile) | Wachs (Paraffin EP 68/72) (Gew.-Teile) |
|---|---|---|---|
| 12 | 88 | 6 | 6 |
| 13 | 82 | 6 | 12 |
| 14 | 76 | 12 | 12 |

Die Gesamtmenge der Komponenten betrug 225 g.

Die Verfahrensprodukte dieser Beispiele wurden als freifließende Pulver erhalten. Zum Nachweis der Homogenität wurden die Produkte analysiert. Dazu wurde eine genau eingewogene Menge in Wasser gelöst und die organische Substanz mit n-Hexan extrahiert. Nach Entfernen des Hexans wurden Gesamtmenge und Hydroxylzahl des Rückstandes bestimmt. Die Analysenergebnisse zeigten, daß der verzweigte Alkohol 2-Octyldodecanol und das Paraffinwachs homogen auf dem festen Träger verteilt waren.

Beispiele 15, 16 und 17

Diese Beispiele beschreiben die Herstellung von weniger bevorzugten Produkten unter Verwendung eines Paraffinwachses vom Erstarrungspunkt 57/60° C (Handelsprodukt der Firma Merck). Im übrigen wurde wie in den vorausgehenden Beispielen 12 bis 14 verfahren, d. h. es wurde ebenfalls Natriumtriphosphat als Träger und ein Alkohol/Kieselsäure-Gemisch gemäß Beispiel 10 verwendet. Demnach hatten die resultierenden Produkte die folgende Zusammensetzung:

| Beispiel | Natriumtriphosphat (Gew.-Teile) | Alkohol/Kieselsäure-Komponente gemäß Beispiel 10 (Gew.-Teile) | Wachs (Paraffin EP 57/60) (Gew.-Teile) |
|---|---|---|---|
| 15 | 88 | 6 | 6 |
| 16 | 82 | 6 | 12 |
| 17 | 76 | 12 | 12 |

Die Gesamtmenge der Komponenten betrug 225 g.

Mit diesen Produkten werden bei der anwendungstechnischen Prüfung ausreichende Schaumnoten erst mit vergleichsweise hohen Konzentrationen erreicht (vgl. Beispiel 26).

Beispiele 18, 19 und 20

Diese Beispiele beschreiben die Herstellung des erfindungsgemäßen pulverförmigen Entschäumers, indem man nach einer ebenfalls bevorzugten Verfahrensvariante verfährt und zunächst das flüssige Alkohol/Kieselsäure-Gemisch der Komponente (a) mit der durch Erwärmen verflüssigten Wachskomponente (b) vermischt und erst danach mit dem erwärmten pulverförmigen Träger zusammenbringt. Es werden die auch in den Beispielen 12, 13 und 14 verwendeten Komponenten in den dort angegebenen Mengen und Mengenverhältnissen verwendet. Der Vermischungsvorgang des flüssigen Vorgemisches aus den Komponenten (a) und (b) mit dem Träger (c) betrug ebenfalls 15 Minuten; danach wurde wie beschrieben abgekühlt und analysiert.

| Beispiel | Natriumtriphosphat (Gew.-Teile) | Komponente (a) (wie in Beispiel 10) (Gew.-Teile) | Wachs (Paraffin EP 68/72) (Gew.-Teile) |
|---|---|---|---|
| 18 | 88 | 6 | + 6 |
| 19 | 82 | 6 | + 12 |
| 20 | 76 | 12 | + 12 |

Die Gesamtmenge der Komponenten betrug 225 g.

Mit den so hergestellten Produkten wurden gute Schaumnoten erhalten.

Beispiele 21, 22 und 23

Diese Beispiele beschreiben die Herstellung von erfindungsgemäßen Produkten analog zu Beispiel 12, jedoch mit dem Alkohol/Kieselsäure-Gemisch des Beispiels 11. Allerdings wurden anstelle des dort verwendeten Paraffinwachses 68/72° C die folgenden Wachse mit höherem Erstarrungspunkt eingesetzt:

Beispiel 21: Ein Paraffinwachs mit dem Erstarrungspunkt 78° C (Multiwax ML 445 der Firma Witco), Vermischungstemperatur 95° C;
Beispiel 22: ein Paraffinwachs mit dem Erstarrungspunkt 93° C (Multiwax M 200 der Firma Witco), Vermischungstemperatur 110° C;
Beispiel 23: ein Paraffinwachs mit dem Erstarrungspunkt 96—100° C (Veba-Wachs SH 105), Vermischungstemperatur 110° C.

Mit den resultierenden Verfahrensprodukten wurden ebenfalls gute schauminhibierende Wirkungen festgestellt. Während im Falle der Produkte der Beispiele 21 und 22 Anwendungskonzentrationen entsprechend 0,05 Gew.-% Komponente (a) und 0,05 Gew.-% Komponente (b) ausreichten, waren zur Erzielung vergleichbarer Schaumnoten die doppelten Mengen des Produkts nach Beispiel 23 erforderlich.

Beispiel 24

Dieses Beispiel beschreibt die Herstellung eines erfindungsgemäßen Entschäumers analog zu Beispiel 18, d. h. es wurde erst das Alkohol/Kieselsäure-Gemisch (a) (6 Gewichtsteile) mit dem verflüssigten Wachs mit EP 68/72 (b) (6 Gewichtsteile) vermischt und anschließend dieses Gemisch zu dem erwärmten Träger (c) (88 Gewichtsteile) gegeben; Gesamtmenge 225 g. Als Alkohol/Kieselsäure-Gemisch wurde das Produkt des Beispiels 11 aus 12 000 g Guerbetalkohol und 1080 g Aerosil eingesetzt.

Das in den Beispielen 12 bis 24 als Trägerkomponente verwendete Natriumtriphosphat wurde durch calciniertes Natriumsulfat und durch sprüh- und walzengetrocknete Natriumsilikat-Pulver ersetzt. Außerdem wurde als Träger ein sprühgetrocknetes Pulver der ungefähren Zusammensetzung 32 Gew.-% Natriumtriphosphat, 45 Gew.-% Natriumsulfat, 11 Gew.-% Natriumsilikat ($Na_2O \cdot 2\,SiO_2$) und 12 Gew.-% Wasser verwendet. Die resultierenden Entschäumerpulver besitzen ebenfalls gute Anwendungseigenschaften.

Beispiel 25

Dieses Beispiel beschreibt die Herstellung eines aus der europäischen Offenlegungsschrift 000 216 bekannten Entschäumers auf der Basis Paraffinöl, Paraffinwachs und hydrophobierter Kieselsäure. Dazu wurden 300 g Paraffinöl (Viskosität 192 mPa · s bei 20°C) unter intensivem Rühren (Pendraulik-Rührer, Zahnscheibe 60 mm Durchmesser, 3700 U/min) mit 18 g Aerosil R 972 versetzt. Nach beendeter Zugabe wurde der Ansatz 15 Minuten bei gleicher Drehzahl homogenisiert und anschließend in einer Stickstoffatmosphäre unter normalem Rühren (Blattrührer 400 U/min) 5 Stunden lang auf 240°C erhitzt. Anschließend wurden in einem 0,75-l-Laborkneter eine Menge von 225 g aus 88 Gewichtsteilen Natriumtriphosphat bei 90°C mit einer auf 90°C erhitzten Mischung aus 6 Gewichtsteilen der wie oben beschrieben hergestellten Paraffinöl-Aerosil-Dispersion und 6 Gewichtsteilen eines Paraffinwachses vom Erstarrungspunkt 68/72°C versetzt und 20 Minuten bei dieser Temperatur gemischt. Danach wurde unter Mischen in etwa 20 Minuten auf Raumtemperatur abgekühlt. Die erzielbare Schauminhibierung entspricht etwa der, die man mit den erfindungsgemäßen Entschäumern, die ein Wachs mit einem Erstarrungspunkt unterhalb 60°C enthalten, erreicht.

Beispiel 26

Zur Bestimmung der schauminhibierenden Wirkung wurden die Produkte der Beispiele 12 bis 25 zusammen mit einem Versuchswaschmittel ohne Schauminhibitor eingesetzt.

Dieses Versuchswaschmittel hatte die folgende Zusammensetzung (in Gew.-%):

| | |
|---|---|
| 7,0 | n-Dodecylbenzolsulfonat-Na-Salz, |
| 2,5 | Talgalkohol + 14 EO, |
| 40,0 | Natriumtriphosphat, |
| 3,5 | Wasserglas ($Na_2O$ : $SiO_2$ wie 1 : 3,35), |
| 24,0 | Natriumperborat-tetrahydrat, |
| 2,5 | Magnetsiumsilikat, |
| 0,2 | Ethylendiamintetraacetat-Na-Salz, |
| 1,0 | Na-Carboxymethylcellulose, |
| 0,3 | optischer Aufheller, |
| Rest | Natriumsulfat und Wasser. |

Die Anwendungskonzentration der Entschäumerprodukte betrug 0,1 bis 0,4 Gew.-%, bezogen auf die Summe der Mengenanteile der Komponenten (a) und (b) bei den erfindungsgemäßen Produkten und auf die Summe der Mengenanteile des Paraffinöls und des Paraffinwachses bei dem bekannten Produkt. Mit den Waschmittelformulierungen wurde in einer Trommelwaschmaschine (Miele W 433) ein normaler Kochwaschgang bis 95°C mit Vor- und Klarwäsche durchgeführt. Die Maschine war mit 3,5 kg sauberer Haushaltswäsche beladen und die Wasserhärte betrug lediglich 3°dH, d. h. es wurden Verhältnisse gewählt, die eine starke Schaumentwicklung begünstigen. Die Waschmittelmenge betrug jeweils 100 g für die Vor- und die Klarwäsche.

Zur Bestimmung des Schaumverhaltens wurde die Schaumhöhe durch das Sichtglas der Fronttüre

der Waschmaschine kontrolliert und nach der folgenden Skala benotet:

| | | |
|---|---|---|
| kein Schaum | = | 0 |
| 1/4 der Sichtglashöhe | = | 1 |
| 1/2 der Sichtglashöhe | = | 2 |
| 3/4 der Sichtglashöhe | = | 3 |
| 4/4 der Sichtglashöhe | = | 4 |
| Schaum im Einfüllstutzen | = | 5 |

Bei Überschäumen der Waschmaschine wurde der Flottenverlust gewogen.

Die folgende Tabelle gibt das Schaumverhalten des Waschmittels mit der angegebenen Einsatzkonzentration an erfindungsgemäßem Entschäumer bzw. Vergleichsprodukt für die Waschtemperatur von 95° C wieder, bzw. es wird der Flottenverlust angegeben.

| Beispiel | Konzentration an Alkohol/Kieselsäure-Komponente (a) (Gew.-%) | Wachs-Komponente (b) (EP °C) (Gew.-%) | Schaumnote/ Flottenverlust in g |
|---|---|---|---|
| 12a | 0,05 | 0,05 (68/72) | 2 |
| 12b | 0,025 | 0,025 (68/72) | 4 |
| 13 | 0,05 | 0,1 (68/72) | 3 |
| 14 | 0,05 | 0,05 (68/72) | 4 |
| 15 | 0,2 | 0,2 (57/60) | 4 |
| 16 | 0,2 | 0,4 (57/60) | 2 |
| 17 | 0,3 | 0,3 (57/60) | 4 |
| 18a | 0,05 | 0,05 (68/72) | 2 |
| 18b | 0,025 | 0,025 (68/72) | 4 |
| 19 | 0,05 | 0,1 (68/72) | 4 |
| 20 | 0,05 | 0,05 (68/72) | 3 |
| 21 | 0,05 | 0,05 (78) | 3 |
| 22 | 0,05 | 0,05 (93) | 5 |
| 23 | 0,1 | 0,1 (96/100) | 4 |
| 24a | 0,05 | 0,05 (68/72) | 1 |
| 24b | 0,025 | 0,025 (68/72) | 4 |
| 25 | Paraffinöl/ Aerosil R 972 | | |
| | 0,1 | 0,1 (68/72) | 70 g |
| | 0,2 | 0,2 (68/72) | 4 |

**Patentansprüche**

1. Pulverförmiger im wesentlichen silikonfreier Entschäumer für wäßrige Systeme, enthaltend eine organische, silikonfreie Verbindung und feinteilige hydrophobierte Kieselsäure, ein Wachs und einen wasserlöslichen Träger, dadurch gekennzeichnet, daß er sich im wesentlichen zusammensetzt aus

a) einem flüssigen homogenen, durch 1—5stündiges Erhitzen auf 100° bis 240° C erhaltenen Gemisch eines 16—30 C-Atome aufweisenden, kettenverzweigten, primären Alkohols und einer hydrophobierten, kolloidalen Kieselsäure im Verhältnis Alkohol : Kieselsäure von 100 : 2 bis 100 : 20,
b) einem wasserunlöslichen Wachs mit einem Mengenverhältnis von (a) : (b) von 3 : 1 bis 1 : 3,
c) einem wasserlöslichen, pulverförmigen Träger, wobei die Komponenten (a) und (b) auf dem Träger (c) in homogener Verteilung vorliegen und wobei der pulverförmige Träger in Mengen, die ein schüttfähiges Pulverprodukt gewährleisten, vorhanden ist.

2. Entschäumer nach Anspruch 1, dadurch gekennzeichnet, daß das Mischungsverhältnis von Alkohol zu Kieselsäure 100 : 1 bis 100 : 10 und das Mischungsverhältnis der Komponenten (a) und (b) 1 : 1 bis 1 : 2 beträgt.

3. Entschäumer nach Anspruch 1 und 2, dadurch gekennzeichnet, daß der kettenverzweigte primäre Alkohol der Komponente (a) ein Guerbet-Alkohol der Formel

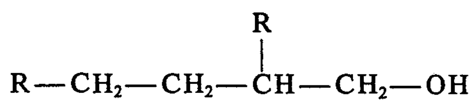

in der die beiden Gruppen R gleich oder verschieden sein können und Alkylreste mit 4—16 Kohlenstoffatomen bedeuten, wobei der Alkohol insgesamt 16—30 Kohlenstoffatome aufweist, darstellt.

4. Entschäumer nach Anspruch 1 und 2, dadurch gekennzeichnet, daß die Komponente (b) aus einem natürlichen oder synthetischen Paraffinwachs oder aus einem Wachsgemisch mit einem Erstarrungspunkt (EP) im Bereich von 40—120° C, insbesondere im Bereich von 60—95° C besteht.

5. Entschäumer nach Anspruch 1 und 2, dadurch gekennzeichnet, daß der wasserlösliche pulverförmige Träger (c) aus einem wasserlöslichen, mit den zu entschäumenden wäßrigen Systemen verträglichen Alkalisalz aus der Gruppe der Phosphate, der polymeren Phosphate, der Borate, der Carbonate, der Silikate, der Sulfate oder deren Mischungen, vorzugsweise aus Natriumtriphosphat, besteht.

6. Entschäumer nach Anspruch 1 bis 5, enthaltend 2—20, vorzugsweise 4—15 Gew.-% der Komponente (a), 2—20, vorzugsweise 4—15 Gew.-% der Komponente (b) und 60—96 Gew.-% der Komponente (c).

7. Verfahren zur Herstellung des pulverförmigen Entschäumers nach Anspruch 1—6, dadurch gekennzeichnet, daß man

a) einen 16—30 C-Atome aufweisenden, kettenverzweigten primären Alkohol mit einer hydrophobierten, kolloidalen Kieselsäure im Mischungsverhältnis, Alkohol : Kieselsäure von 100 : 2 bis 100 : 20 homogenisiert und unter fortwährendem Vermischen während 1 bis 5 Stunden auf Temperaturen von 100 bis 240° C erhitzt,
b) ein wasserunlösliches Wachs bei einer Temperatur, die oberhalb seines Erstarrungspunktes liegt, mit der Komponente (a) im Verhältnis 3 : 1 bis 1 : 3 und
c) einen wasserlöslichen, pulverförmigen Träger, der in einer Menge vorliegt, die ein schüttfähiges Pulverprodukt gewährleistet, miteinander vermischt, so daß die Komponente (a) und (b) auf dem Träger (c) in homogener Verteilung vorliegen.

8. Verfahren nach Anspruch 7, dadurch gekennzeichnet, daß man zu dem erwärmten Träger (c) das flüssige Alkohol/Kieselsäure-Gemisch (a) hinzugibt, bis zur Homogenität vermischt, vorzugsweise im Verlaufe von 10—30 Minuten, dann das erwärmte flüssige Wachs (b) hinzufügt und ebenfalls bis zur Homogenität vermischt, und daß man anschließend unter weiterem Vermischen auf Raumtemperatur abkühlt und zu einem schüttfähigen Produkt zerkleinert.

9. Verfahren nach Anspruch 7, dadurch gekennzeichnet, daß man das flüssige Alkohol/Kieselsäure-Gemisch (a) und das flüssige Wachs (b) vermischt, die resultierende flüssige Mischung mit dem erwärmten Träger bis zur Homogenität vermischt, und anschließend abkühlt und zerkleinert.

10. Verwendung des pulverförmigen Entschäumers nach Anspruch 1—6 als Schauminhibitor für wäßrige Systeme.

11. Verwendung des pulverförmigen Entschäumers nach Anspruch 1—6 in Wasch- und Reinigungsmitteln in Mengen von 0,15 bis 15 Gew.-%, vorzugsweise 0,8 bis 4 Gew.-%.

**Claims**

1. A powder-form substantially silicone-free defoamer for aqueous systems containing an organic silicone-free compound and finely divided hydrophobized silica, a wax and a water soluble carrier, characterized in that it is essentially composed of

a) a liquid homogeneous mixture, obtained by heating for 1 to 5 hours at 100 to 240° C, of a branched-chain primary alcohol containing from 16 to 30 C-atoms and a hydrophobized colloidal silica in a ratio of alcohol to silica of from 100 : 2 to 100 : 20,
b) a water-insoluble wax in a quantitative ratio of (a) to (b) of from 3 : 1 to 1 : 3,
c) a water-soluble powder-form carrier, components (a) and (b) being present in homogeneous distribution on the carrier (c) and the powder-form carrier being present in quantities which guarantee a pourable powder product.

2. A defoamer as claimed in Claim 1, characterized in that the mixing ratio of alcohol to silica amounts to between 100 : 1 and 100 : 10 and the mixing ratio of components (a) and (b) to between 1 : 1 and 1 : 2.

3. A defoamer as claimed in Claims 1 and 2, characterized in that the branched-chain primary alcohol of component (a) is a Guerbet alcohol corresponding to the following formula

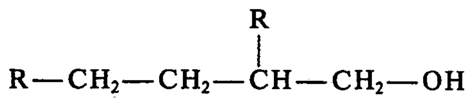

in which the two groups R may be the same or different and represent $C_4-C_{16}$ alkyl radicals, the alcohol containing a total of 16 to 30 carbon atoms.

4. A defoamer as claimed in Claims 1 and 2, characterized in that the component (b) consists of a natural or synthetic paraffin wax or of a wax mixture having a solidification point (SP) in the range from 40 to 120° C and more particularly in the range from 60 to 95° C.

5. A defoamer as claimed in Claims 1 and 2, characterized in that the water-soluble powder-form carrier (c) consists of a water-soluble alkali salt, compatible with the aqueous systems to be defoamed, from the group comprising phosphates, polymeric phosphates, borates, carbonates, silicates, sulfates and mixtures thereof, preferably of sodium triphosphate.

6. A defoamer as claimed in Claims 1 to 5 containing from 2 to 20% by weight and perferably from 4 to 15% by weight of component (a), from 2 to 20% by weight and preferably from 4 to 15% by weight of component (c) and from 60 to 96% by weight of component (c).

7. A process for producing the powder-form defoamer claimed in Claims 1 to 6, characterized in that

a) a branched-chain primary alcohol containing from 16 to 30 carbon atoms is homogenized with a hydrophobized colloidal silica in a mixing ratio of alcohol to silica of from 100 : 2 to 100 : 20 and heated with continued mixing for 1 to 5 hours at temperatures of from 100 to 240° C,
b) a water-insoluble wax in a ratio to component (a) of from 3 : 1 to 1 : 3 and
c) a water-soluble, powder-form carrier present in a quantity sufficient to guarantee a pourable powder are mixed with one another at a temperature above the solidification point of the wax so that components (a) and (b) are present in homogeneous distribution on the carrier (c).

8. A process as claimed in Claim 7, characterized in that the liquid alcohol/silica mixture (a) is added to the heated carrier (c) and the two components homogenized, preferably for 10 to 30 minutes, after which the liquid wax (b) is added and the components likewise homogenized and in that the homogenized components are then cooled to room temperature with continued mixing and size-reduced to form a pourable powder.

9. A process as claimed in Claim 7, characterized in that the alcohol/silica mixture (a) and the liquid wax (b) are mixed, the resulting liquid mixtue is homogenized with the heated carrier, followed by cooling and size reduction.

10. The use of the powder-form defoamer claimed in Claims 1 to 6 as a foam inhibitor for aqueous systems.

11. The use of the powder-form defoamer claimed in Claims 1 to 6 in detergents and cleaners in quantities of from 0.15 to 15% by weight and perferably in quantities of from 0.8 to 4% by weight.

**Revendications**

1. Antimousse pulvérulent, sensiblement exempt de silicium, pour systèmes aqueux, contenant un composé organique hydrophobe, une cire et un support soluble à l'eau, caractérisée en:

a) un mélange liquide homogène, obtenu en chauffant pendant 1 à 5 heures, à 100 à 240° C un alcool primaire à chaine ramifiée comportant de 16 à 30 atomes de C, et un acide silicique colloïdal rendu hydrophobe, dans le rapport alcool : acide salicique de 100 : 2 à 100 : 20;
b) une cire insoluble, avec un rapport entre a) et b) de 3 : 1 à 1 : 3,
c) un support pulvérulent soluble à l'eau, où les composants (a) et (b) se trouvent sur le support dispersés d'une façon homogène, et où le support pulvérulent est présent dans une proportion qui assure que le produit en poudre soit fluide.

2. Antimousse suivant la revendication 1, caractérisée en ce que le rapport du mélange d'alcool et d'acide silicique est de 100 : 1 à 100 : 10 et le rapport du mélange des composants (a) et (b) se monte à 1 : 1 à 1 : 2.

3. Antimousse suivant l'une des revendications 1 et 2, caractérisée en ce que l'alcool primaire à chaine ramifiée du composant (a) est un alcool Guerbet répondant à la formule suivante:

$$R-CH_2-CH_2-\overset{\displaystyle R}{\overset{|}{C}}H-CH_2-OH$$

dans lequel les deux groupes R peuvent être semblables ou différents et représenter des restes alcoyles à 4 à 16 atomes de carbone, l'alcool comportant au total 16 à 30 atomes de carbone.

4. Antimousse suivant l'une des revendications 1 et 2, caractérisée en ce que le composant (b) est constitué par une cire paraffinique naturelle ou synthétique, ou un mélange de cires dont le point de solidification (EP) est de l'ordre de 40 à 120° C, en particulier de l'ordre de 60 à 96° C.

5. Antimousse suivant l'une des revendications 1 et 2, caractérisée en ce que le support (c) en poudre, soluble à l'eau, est constitué par un sel alcalin, compatible avec les systèmes aqueux que l'on doit empêcher de mousser, soluble à l'eau, du groupe des phosphates, des phosphates polymères, des borates, carbonates, silicates, sulfates ou de leurs mélanges, de préférence de phosphate de sodium.

6. Antimousse suivant l'une des revendications 1 à 5, contenant 2 à 20, de préférence 4 à 15% en poids du composant (a), 2 à 20, de préférence 4 à 15% en poids du composant (b), et 60 à 96% en poids du composant (c).

7. Procédé pour la fabrication d'un anti-mousse en poudre suivant l'une des revendications 1 à 6, caractérisée en ce que:

a) l'on homogénéise un alcool primaire à chaine ramifiée comportant de 16 à 30 atomes de C avec un acide silicilique colloïdal que l'on a rendu hydrophobe, dans un rapport ede mélange alcool : acide silicique de 100 : 2 à 100 : 20, et chauffe à des températures de 100 à 240° C, pendant 1 à 5 heures, tout en poursuivant le travail de mélange, et mélange ce composant a) avec
b) une cire insoluble à l'eau à une température qui soit supérieure à sa température de solidification dans un rapport de 3 : 1 à 1 : 3, et
c) un support pulvérulent, soluble à l'eau, dans une proportion qui assure la formation d'un produit en poudre fluide, dans des conditions telles que les composants (a) et (b) se trouvent sur le support (c) sous la forme d'une répartion homogène.

8. Procédé suivant la revendication 7, caractérisée en ce que l'on apporte le mélange liquide (a) alcool/acide silicique sur le support chauffé (c), mélange jusqu'à homogénéité, de préférence en l'espace de 10 à 30 minutes, ajoute ensuite la cire liquide (b) chaude, et mélange également jusqu'à homogénéité, que l'on refroidit ensuite à la température ambiante tout en continuant à mélanger, et broie ensuite en un produit fluide.

9. Procédé suivant la revendication 7, caractérisée en ce qu'on mélange le mélange (a) alcool/liquide/acide silicique et la cire liquide (b), puis le mélange obtenu, liquide, avec le support chaud jusqu'à ce qu'il soit homogène puis refroidit et broie l'ensemble.

10. Utilisation de l'anti-mousse pulvérulent suivant les revendications 1 à 6, comme inhibiteur de la formation de mousse pour des systèmes aqueux.

11. Utilisation de l'anti-mousse pulvérulent suivant les revendications 1 à 6, dans les lessives et produits de nettoyage dans des proportions de 0,15 à 15% en poids, de préférence de 0,8 à 4% en poids.